# EUROPÄISCHE PATENTSCHRIFT

(11) **EP 1 131 667 B1**
(45) Veröffentlichungstag und Bekanntmachung des Hinweises auf die Patenterteilung: **15.10.2003**
(21) Anmeldenummer: 99944158.7
(22) Anmeldetag: 16.09.1999
(51) Int. Cl.: G02C 5/22

(54) **INKLINATIONSGELENK FÜR EINEN BRILLENBÜGEL**
INCLINATION HINGE FOR THE BOW OF A PAIR OF EYEGLASSES
ARTICULATION D'INCLINAISON POUR BRANCHE DE LUNETTES

(30) Priorität: 12.10.1998 AT 169598
(43) Veröffentlichungstag der Anmeldung: 12.09.2001
(73) Patentinhaber: Silhouette International Schmied AG, 4021 Linz (AT)
(72) Erfinder: SPINDELBALKER, Rupert, A-4048 Puchenau (AT)
(74) Vertreter: Hübscher, Helmut, Dipl.-Ing.
(86) Internationale Anmeldenummer: AT9900227
(87) Internationale Veröffentlichungsnummer: WO00022476

(56) Entgegenhaltungen:
- WO-A-98/02770
- FR-A- 2 714 492
- US-A- 5 565 937

## Beschreibung

### Technisches Gebiet

Die Erfindung bezieht sich auf ein Inklinationsgelenk für einen Brillenbügel mit einer zwischen Seitenwänden einer Aufnahmetasche eines Bügelbackens geführten Gelenklasche, die auf einer die Aufnahmetasche durchsetzenden Inklinationsachse schwenkbar gelagert und in verschiedenen Inklinationsstellungen über eine Rastverzahnung aus einerseits der Gelenklasche und anderseits dem Bügelbacken zugehörigen Zahnreihen verrastbar ist.

### Stand der Technik

Zur Neigungsverstellung eines Brillenbügels ist es bekannt (WO 98/02770 A1), an Bügelbacken eine Aufnahmetasche für eine Gelenklasche vorzusehen, an der der Brillenbügel mit Hilfe eines herkömmlichen Brillenscharniers angelenkt wird. Diese Gelenklasche ist zwischen den beiden Seitenwänden der Aufnahmetasche durch eine die Seitenwände und die Gelenklasche durchsetzende Inklinationsachse schwenkbar gehalten, die in der Strecklage des Bügels quer zu diesem und quer zur Drehachse des Scharniergelenks verläuft, so daß der Bügel in seiner Neigung gegenüber dem Brillengestell eingestellt werden kann. Die eingestellte Inklinationsstellung des Bügels wird über eine Rastverzahnung gesichert, die aus zur Inklinationsachse koaxialen Zahnkranzabschnitten auf den Stirnseiten der Seitenwände der Aufnahmetasche und aus mit diesen zusammenwirkenden Innenzahnkranzabschnitten besteht, die an die gezahnten Stirnseiten der Seitenwände der Aufnahmetasche übergreifenden Schultern der Gelenklasche angeordnet sind. Da die zur Anpassung an die anatomischen Gegebenheiten eines Brillenträgers erforderliche Neigungsverstellung der Brillenbügel lediglich kleine Winkelschritte verlangt, sind die Rastzähne der Rastverzahnung klein auszubilden, was zwar das Überspringen der Zähne der Rastverzahnung bei einer Neigungsverstellung erleichtert, zugleich aber auch eine belastungsfähige Verrastung erschwert, zumal Lagerspiele und Fertigungstoleranzen aufgrund der zur Inklinationsachse koaxialen Rastverzahnung unmittelbar Einfluß nehmen.

### Darstellung der Erfindung

Der Erfindung liegt somit die Aufgabe zugrunde, ein Inklinationsgelenk der eingangs geschilderten Art so auszugestalten, daß auch unter den Bedingungen einer Serienproduktion ein sicherer Rastsitz des Brillenbügels in der jeweils gewählten Inklinationsstellung gewährleistet werden kann.

Die Erfindung löst die gestellte Aufgabe durch die im beigefügten Anspruch 1 definierten Merkmale, wobei auf wenigstens einer der Seitenwände der Aufnahmetasche und der anliegenden Seitenfläche der Gelenklasche je eine Zahnreihe der Rastverzahnung vorgesehen ist, deren Zähne in Einführrichtung der Gelenklasche in die Aufnahmetasche ausgerichtet sind.

Da zufolge dieser Maßnahmen die Rastverzahnung nicht entlang eines zur Inklinationsachse koaxialen Zylinders, sondern in einer zur Inklinationsachse senkrechten Ebene erfolgt, spielen Toleranzbereiche bezüglich der radialen Abmessungen des Inklinationsgelenkes keine Rolle für die Sicherheit des durch die Rastverzahnung gegebenen Rastsitzes der Gelenklasche in der Aufnahmetasche. Die Ausrichtung der Zähne der Rastverzahnung in Einführrichtung der Gelenklasche in die Aufnahmetasche erlaubt eine einfache Montage des Inklinationsgelenkes, weil ja die Gelenklasche parallel zur Zahnausrichtung in die Aufnahmetasche eingeführt werden kann, um in der Aufnahmetasche durch die nachträglich eingesetzte Inklinationsachse festgehalten zu werden. Die der Einführrichtung der Gelenklasche in die Aufnahmetasche entsprechende Inklinationsstellung der Gelenklasche, vorzugsweise eine Mittelstellung, wird über die parallelen Zähne der ineinandergreifenden Zahnreihen der Rastverzahnung ausreichend gesichert, und zwar unter einem weitgehenden Toleranzausgleich, weil ja mit wachsendem Abstand der Zähne von dem in einer Axialebene der Inklinationsachse liegenden Zahn der Winkel der Zahnausrichtung gegenüber einem zugehörigen Radius bezüglich der Inklinationsachse größer wird. Wird die Gelenklasche aus dieser Inklinationsstellung verdreht, so verdrehen sich die Zähne der laschenseitigen Zahnreihe gegenüber den Zähnen der Aufnahmetasche, was einen weiteren Toleranzausgleich mit sich bringt, weil dann die Zähne der ineinandergreifenden Zahnreihen der Rastverzahnung unter einer elastischen Vorspannung ineinandergreifen. Die Verdrehung der Zähne entsprechend den durch die Zahnteilung gegebenen Winkelschritten ist allerdings auf wenige Winkelschritte beschränkt, was jedoch bei einer Inklinationseinstellung eines Brillenbügels keine Rolle spielt, weil die Neigungsverstellung auf einen kleinen Winkelbereich beschränkt werden kann. Es zeigt sich somit, daß durch die erfindungsgemäßen Maßnahmen ein Inklinationsgelenk erhalten wird, das einen spielfreien Rastsitz für die eingestellten Inklinationsstellungen erlaubt. Die Anordnung der Zahnreihen zwischen den Seitenflächen der Gelenklasche und den anliegenden Seitenwänden der Aufnahmetasche bietet außerden vorteilhafte Voraussetzungen für das elastische Überspringen der Zähne der Rastverzahnung bei einer Rastverstellung, weil die Seitenwände der Aufnahmetasche entsprechend ausfedern können.

Um besonders einfache Konstruktionsverhältnisse erzielen zu können, kann die Rastverzahnung eine gerade verlaufende Zahnreihe auf wenigstens einer Seitenfläche und eine zugehörige Zahnreihe mit größerer Breite im Mündungsbereich der Aufnahmetasche aufweisen. Die größere Breite der der Aufnahmetasche zugehörigen Zahnreihe ist bei einer geraden Zahnreihe der Gelenklasche erforderliche, um die gegenseitige Versetzung der ineinandergreifenden Zahnreihen bei einer Schwenkverstellung der Gelenklasche zu berücksichtigen. In diesem Zusammenhang ist außerdem festzuhalten, daß die Breite der Zahnreihe der Gelenklasche beschränkt bleiben muß, um auch nach einem Verschwenken der Gelenklasche einen Zahneingriff der Rastverzahnung sicherzustellen.

### Kurze Beschreibung der Zeichnungen

In der Zeichnung ist der Erfindungsgegenstand beispielsweise dargestellt. Es zeigen
- Fig. 1: eine Brille mit einem erfindungsgemäßen Inklinationsgelenk für einen Brillenbügel ausschnittsweise im Bereich des Inklinationsgelenkes in einer Seitenansicht auf die Innenseite des Bügels,
- Fig. 2: einen Schnitt nach der Linie II-II der Fig. 1 in einem größeren Maßstab und
- Fig. 3: einen Schnitt nach der Linie III-III der Fig. 2.

### Wege zur Ausführung der Erfindung

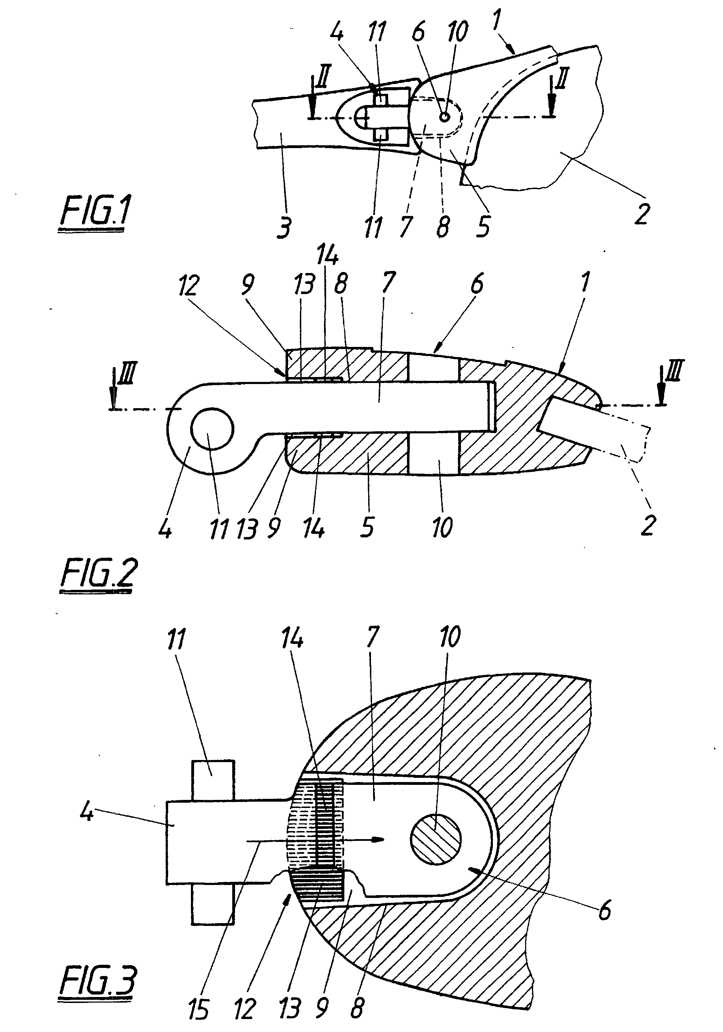

Die in der Fig. 1 dargestellte Brille weist ein Brillengestell 1 zur Aufnahme von Brillengläsern 2 sowie zwei Bügel 3 auf, die über ein Brillenscharnier 4 an einem Bügelbacken 5 des Gestelles 1 angelenkt sind. Das Brillenscharnier 4 ist jedoch nicht starr, sondern über ein Inklinationsgelenk 6 mit dem Bügelbacken 5 verbunden, das aus einer Gelenklasche 7 besteht, die in eine Aufnahmetasche 8 des Bügelsbackens 5 eingreift. Die zwischen den Seitenwänden 9 der Aufnahmetasche 8 geführte Gelenklasche 7 wird durch eine die Seitenwände 9 und die Gelenklasche 7 durchsetzende Inklinationsachse 10 schwenkbar in der Aufnahmetasche 8 gehalten, so daß der an der Gelenklasche 7 des Inklinationsgelenkes 6 angelenkte Brillenbügel 3 in seiner in Fig. 1 dargestellten Strecklage quer zu seiner Längsrichtung und quer zur Scharnierachse 11 in seiner Neigung eingestellt werden kann.

Zur Sicherung der jeweiligen Inklinationsstellung ist eine Rastverzahnung 12 vorgesehen, die aus paarweise zusammenwirkenden Zahnreihen 13 und 14 besteht, die einerseits im Mündungsbereich der Aufnahmetasche 8 auf der Innenseite der Seitenwände 9 der Aufnahmetasche 8 und anderseits auf den anliegenden Seitenflächen der Gelenklasche 7 vorgesehen sind. Wie insbesondere der Fig. 3 entnommen werden kann, sind die Zähne der Zahnreihen 13 und 14 nicht radial gegenüber der Inklinationsachse 10, sondern parallel zueinander ausgerichtet, wobei die Zahnausrichtung mit der durch einen Pfeil 15 angedeuteten Einführrichtung der Gelenklasche 7 in die Aufnahmetasche 8 übereinstimmt. Durch diese Maßnahme kann die Gelenklasche 7 bei der Montage des Inklinationsgelenkes 6 ohne weiters in die Aufnahmetasche 8 unter gleichzeitigem Rasteingriff der Rastverzahnung 12 eingesetzt werden, um dann über die Inklinationsachse 10 in der Aufnahmetasche 8 drehverstellbar gehalten zu werden. Aus dieser durch die Einführrichtung 15 gegebenen Mittelstellung kann die Gelenklasche 7 jeweils um einen oder zwei Zähne nach oben oder unten verschwenkt werden, wobei die Zahnreihen 14 der Gelenklasche 7 gegenüber den Zahnreihen 13 um den Inklinationsschritt verdreht werden. Dies bedeutet, daß die Zähne unter einer geringen Schrägstellung ineinandergreifen müssen, was nur unter einer elastischen Vorspannung des Zahneingriffs möglich ist. Diese elastische Vorspannung bedingt eine spielfreie Halterung der Gelenklasche 7 innerhalb der Aufnahmetasche 8 mit einem ausreichenden Rastsitz, um eine ungewollte Inklinationsverstellung des Bügels 3 vermeiden zu können. Wie die Fig. 3 erkennen läßt, verlaufen die Zahnreihen 14 der Gelenklasche 7 gerade und senkrecht zur Einführrichtung 15, wobei die Breite der Zähne kleiner als die Breite der Zähne der Zahnreihen 13 der Aufnahmetasche gewählt sind, um die gegenseitige Verlagerung der zusammenwirkenden Zahnreihen 13 und 14 in Richtung der Zahnbreite bei einer Inklinationseinstellung zu berücksichtigen.

## Patentansprüche

1. Inklinationsgelenk für einen Brillenbügel (3) mit einer zwischen Seitenwänden (9) einer Aufnahmetasche (8) eines Bügelbackens (5) geführten Gelenklasche (7), die auf einer die Aufnahmetasche (8) durchsetzenden Inklinationsachse (10) schwenkbar gelagert und in verschiedenen Inklinationsstellungen über eine Rastverzahnung (12) aus einerseits der Gelenklasche (7) und anderseits dem Bügelbacken (5) zugehörigen Zahnreihen (13, 14) verrastbar ist, **dadurch gekennzeichnet, daß** auf wenigstens einer der Seitenwände (9) der Aufnahmetasche (8) und der anliegenden Seitenfläche der Gelenklasche (7) je eine Zahnreihe (13, 14) der Rastverzahnung (12) vorgesehen ist, deren Zähne in Einführrichtung (15) der Gelenklasche (7) in die Aufnahmetasche (8) verlaufende Zahnrücken aufweisen.

2. Inklinationsgelenk nach Anspruch 1, **dadurch gekennzeichnet, daß** die Rastverzahnung (12) eine gerade verlaufende Zahnreihe (14) auf wenigstens einer Seitenfläche der Gelenklasche (7) und eine zugehörige Zahnreihe (13) mit größerer Breite im Mündungsbereich der Aufnahmetasche (8) aufweist.

## Claims

1. An inclination joint for the side-piece (3) of a pair of spectacles with a joint link (7) extending between side walls (9) of a holder pocket (8) in a side-piece jaw, said link (7) being mounted pivotally on an inclination pivot (10) extending through the holder pocket (8) and being adapted to catch in different inclination positions by way a catch toothing (12) consisting of rows of teeth (13,14) associated with the joint link (7), on the one hand, and the side-piece jaw (5) on the other hand, **characterised in that** a row of teeth (13,14) of the catch toothing (12) is provided in each case on at least one of the side walls (9) of the holder pocket (8) and the adjoining side surface of the joint link (7), the teeth of said toothing (12) having tooth backs extending in the direction (15) of insertion of the joint link (7) into the holder pocket (8).

2. An inclination joint according to claim 1, **characterised in that** the catch toothing (12) comprises a rectilinearly extending row of teeth (14) on at least one side surface of the joint link (7) and an associated row of teeth (13) of larger width in the orifice region of the holder pocket (8).

## Revendications

1. Articulation d'inclinaison pour une branche de lunettes (3), avec une patte d'articulation (7), guidée entre des parois latérales (9) d'une poche de logement (8) d'un dos de branche (5), patte d'articulation montée à pivotement sur un axe d'inclinaison (10) traversant la poche de logement (8) et susceptible d'être encliquetée, en différentes positions d'inclinaison, par l'intermédiaire d'une denture d'encliquetage (12), formée de rangées de dent (13, 14) appartenant, d'une part, à la patte d'articulation (7) et, d'autre part, au dos de branche (5), **caractérisée en ce que**, sur au moins l'une des parois latérales (9) de la poche de logement (8) et la face latérale en appui de la patte d'articulation (7), est respectivement prévue une rangée de dents (13, 14) pour la denture d'encliquetage (12), dont les dents présentent des dos de dents s'étendant dans la direction d'insertion (15) de la patte d'articulation (7) dans la poche de logement (8).

2. Articulation d'inclinaison selon la revendication 1, **caractérisée en ce que** la denture d'encliquetage (12) présente une rangée de dents (14), s'étendant de façon rectiligne sur au moins une face latérale de la patte d'articulation (7), et une rangée de dents (13) afférente de plus grande largeur, dans la zone d'embouchure de la poche de logement (8).
